# EUROPEAN PATENT SPECIFICATION

(11) **EP 0 977 435 B1**
(45) Date of publication and mention of the grant of the patent: **05.06.2002**
(21) Application number: 99202249.1
(22) Date of filing: 08.07.1999
(51) Int. Cl.: H04N 7/01

(54) **Method and apparatus for conveying picture information**
Verfahren und Vorrichtung zur Übertragung von Bildinformationen
Procédé et appareil pour la transmission d'informations d'images

(30) Priority: 30.07.1998 GB 9816542
(43) Date of publication of application: 02.02.2000
(73) Proprietor: Tandberg Television ASA, 1326 Lysaker (NO)
(72) Inventor: Funnell, John S., Southampton, Hampshire SO15 2TU (GB); Stubbings, Clive A., Eastleigh, Hampshire SO50 7NW (GB); Davies, Colin, Fordingbridge, Hampshire SP6 2NS (GB); Murray, Kevin A., Lockerley, Romsey, Hampshire SO51 0JR (GB); Warburton, Richard J., Southampton, Hampshire SO30 2RP (GB); Huggett, Anthony R., Eastleigh, Hampshire SO50 5PZ (GB); Trimboy, Neil A., Southampton, Hampshire SO30 2XJ (GB)
(74) Representative: Molyneaux, Martyn William

(56) References cited:
- EP-A- 0 585 903
- GB-A- 2 000 419
- US-A- 5 006 936
- US-A- 5 724 101

## Description

This invention relates to the conveyance of picture information, and particularly to the conveyance of non-standard format picture information.

The number of horizontal scanning lines, or alternatively the number of pixels within a matrix, used to display picture information is known as the "format" of picture information. The format of any particular picture display is of fundamental importance to defined standards in e.g. the broadcast industry. Typical examples of such formats are those of standard digital television (SDTV), which includes the European broadcast standard of 625 lines at a frequency of 50Hz, and the American standard of 60Hz frequency and a pixel matrix of at least 720 × 483 (columns × rows) in the visible area. European SDTV pictures have a format of 704 × 480. High Definition Television (HDTV) has a much higher resolution than SDTV, with some of the more common pixel matrices being 1920 × 1080 (although the useable, available matrix is 1920 × 1088) and 1280 × 720.

Our pending application GB 9807206.9 (EP-A-0948208) describes, amongst other aspects, a method suitable for the broadcasting of HDTV programming (including picture information) by modifying an existing broadcasting system. This method includes the steps of splitting the television image into a spatial array of elements and encoding each of the elements in a separate encoder. Although the number of elements will be dependent upon the profile of the original HDTV image, the exemplified embodiment describes six elements (in a 3 × 2 matrix) each having a format of 640 × 544 pixels. This element format is not a standard digital television format.

It will be understood that during passage of picture information within any system it is important that steps are taken to minimise degradation or distortion of the picture information. This is particularly true of digital television picture information - where significant efforts are devoted to ensuring that artefacts, or other picture characteristics associated with a reduction in the integrity of the picture information, are minimised or eradicated. The presence of characteristics such as artefacts is commonly due to the use of complex processing techniques such as motion prediction. These techniques often rely on a spatial comparison of picture information within successive frames.

It will also be understood that the components for use within the broadcast industry are designed and manufactured to support the requirement for compliance with standard formats. It is therefore difficult and/or expensive to source components which are non-compliant with such standard formats.

Accordingly, one object of the present invention is to overcome the problems associated with the prior art.

According to one aspect of the present invention there is provided a method of changing an input picture signal representing lines of pixels arranged to conform to a first matrix of a first line length to an output picture signal representing lines of pixels arranged to conform to a second matrix of a second line length, the method comprising the steps of: entering into a store the pixels of the input signal sequentially in the order of the first matrix; and retrieving the pixels from the store in the same sequential order as entry but in lines which have a different number of pixels per line and wherein the pixels spill over from one line into the next line to conform to the line length of the second matrix.

According to a second aspect of the present invention there is provided apparatus for changing an input picture signal representing lines of pixels arranged to conform to a first matrix of a first line length to an output picture signal representing lines of pixels arranged to conform to a second matrix of a second line length, the apparatus comprising: a store to store the pixels of the input signal sequentially in the order of the first matrix; and a means to output the pixels from the store in the same sequential order as entry but in lines which have a different number of pixels per line and wherein the pixels spill over from one line to the next line to conform to the line length of the second matrix.

Where the first matrix has a non-standard format and the second matrix has a standard format, the invention allows cost-effective standard interface components to be used to convey the pixels of the picture signal in the standard format. In addition, use of standard interface components facilitates interoperability with other existing standard components such as switches and routers within systems.

It will be apparent to one skilled in the art that the pixels may spill from one line to the next line in a variety of predetermined ways. Typical examples are those of "wrapping" and "serpentine" spilling. Where wrapping occurs each successive line is filled from left to right, whilst serpentine spilling allows alternate filling from left to right to be followed by filling from right to left, and so on.

Advantageously, each of the method and apparatus may be duplicated in reverse so as to recover the picture information in the first format. Alternatively the picture information may be changed to conform to yet a third format.

Use of this invention is best suited to conveyance of picture information across standard components where the frequency in the picture information of the first and second format is the same.

Preferably, where the picture information is video information and is included with other information, the store is additionally provided with a means for instructing the store to store active picture (image) information only.

The invention will now be described by way of example, with reference to the accompanying drawings, in which:
Figure 1 is a diagram showing a HDTV image divided into a number of elements;
Figure 2 is an overview of a transmission head end of a HDTV system;
Figure 3 is a diagram showing one embodiment of an interface connection suitable for inclusion within the head-end of Figure 1; and
Figures 4a and 4b are diagrams illustrating a first matrix having a first line length and a second matrix of a second line length respectively.

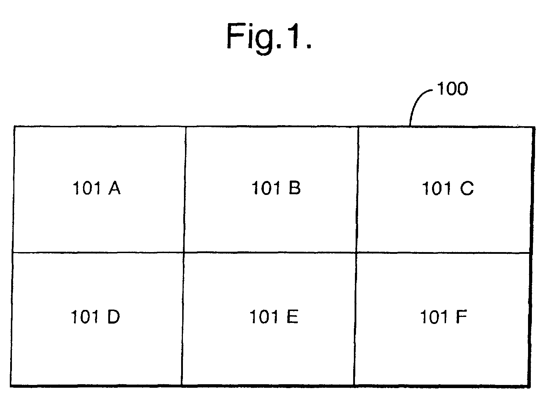

Figure 1 shows an a representation of a HDTV image 100 divided into a number of elements 101, A to F. The format of image 100 is 1920 × 1080 pixels, whilst that of each of elements 101 A-F is 640 × 544.

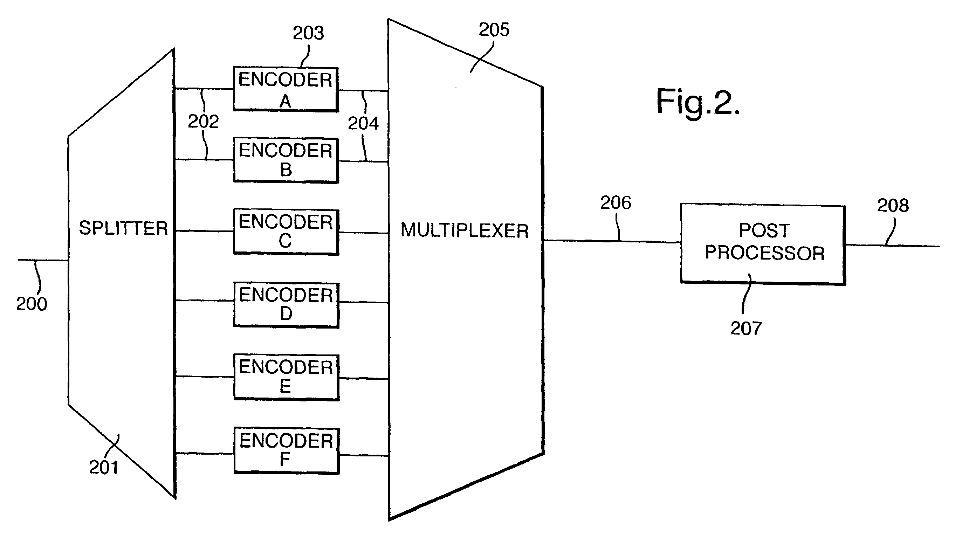

Turning now to Figure 2, there is shown a diagram illustrating an overview of a HDTV system. A HDTV signal 200 is input to a signal splitter 201. The signal splitter 201 divides the image 100 into elements 101 and creates a separate digital bitstream 202 for each element. In this example, as shown in Figure 1, the HDTV image is divided up into six standard television pictures. Each data stream 202 is encoded by a separate standard television encoder 203 to produce a MPEG specific digital bitstream having a main profile at high level (MP@HL). Element A of Figure 1 is encoded by encoder A of Figure 2, element B of Figure 1 is encoded by encoder B of Figure 2 and so on.

The six individual standard television digital bitstreams 204 are then input to a standard multiplexer 205, which may be a statistical multiplexer. The multiplexer 205 multiplexes together the six individual bitstreams to form a single multiplexed bitstream 206. The multiplexed bitstream 206 is a standard multiplexed bitstream containing each of the bitstreams from encoders 203 A-F independent from one another. Following processing by post processor 207 the multiplexed bitstream 206 becomes a HDTV compliant multiplexed bitstream 208. Reference may be made to our pending application GB 9807206.9 (EP-A-0948209) for further information in processing the image 100 of Figure 1 by means of the apparatus of Figure 2.

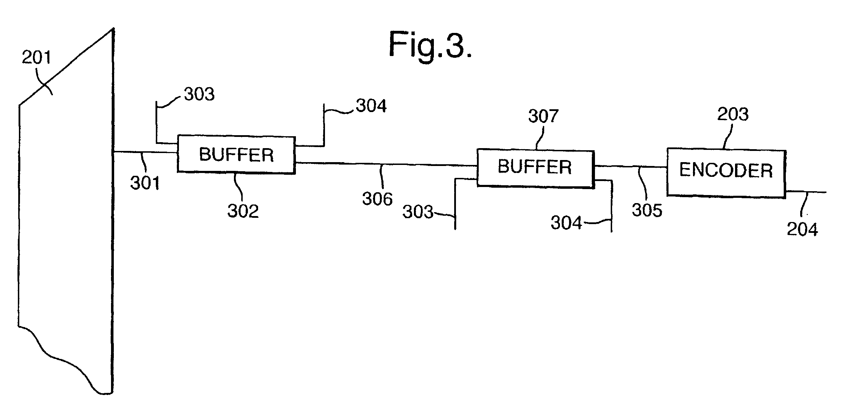

In Figure 3, the splitter 201 is shown coupled to one only of encoders 203. The splitter 201 is coupled to each of the other encoders 203 in a manner generally indicated in Figure 2 but for clarity, Figure 3 shows only one of the encoders 203. The encoder 203 shown in Figure 3 encodes a specific one of the elements 101 of the image 100 but the pixels of that element are reformatted, according to the present invention, before being supplied to the corresponding encoder. The signal 301 supplied by the splitter 201 represents the picture information of the respective image element 101 arranged in a pixel matrix which has a format of 640 × 544 matrix points and a nominal frame rate of 30Hz (i.e. 30 frames per second). Serially connected FIFO buffers 302 and 307 link the splitter 201 to the encoder 203. An interface 306 is provided between the FIFO buffers 302 and 307 and control signal inputs 303 and 304 are provided for each of the FIFO buffers 302 and 307.

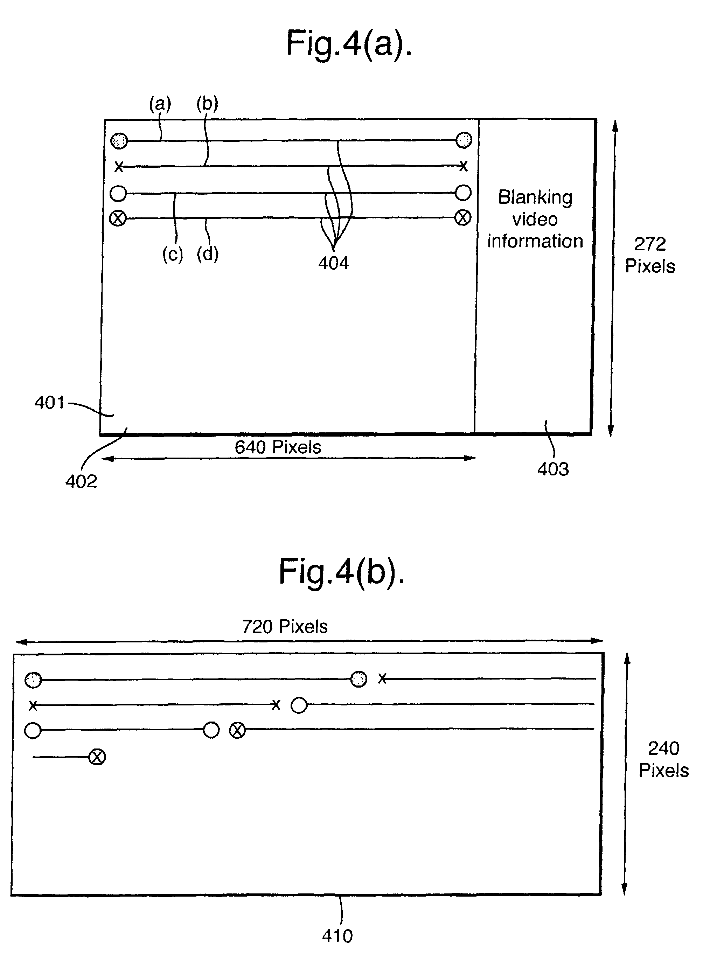

The output signal 301 from splitter 201 is provided as an input signal to the FIFO buffer 302. On receipt of this input, control signal 303 instructs the FIFO buffer that the input contains image information that is to be stored. Control signal 303 also instructs the FIFO buffer not to store picture information extraneous to the image information, such as blanking information commonly present in television picture information. The FIFO buffer 302 is instructed to retrieve the image information to provide as an output signal by control signal 304. The output signal from the FIFO buffer 302 conforms to a second matrix having a second line length by synchronous timing of the number of pixels that would be retrieved from the FIFO Buffer 302 within a given particular time period. It will be understood that the time period can vary according to the particular second line length required. The format of the image information in the input and output signals can be seen in Figures 4 (a) and (b) respectively.

Figure 4 (a) shows a schematic view of a field 401 having image information 402 in a matrix having a non-standard format of 640 × 272 pixels (i.e. a line length of 640 pixels). The format of the output signal image information can be seen at Figure 4(b). Image information 410 has a different line length of 720 in a matrix having a format of 720 × 240 pixels. The image information 401 has been reformatted to be accommodated within the format of 410 such that exemplified rows 404 (a) - (d) have been wrapped into the standard format seen in Figure 4(b). It will be understood by those skilled in the art that where information such as blanking is required to supplement image information 410 (whether in the format of Figure 4(b) or a different format), then this can be added during a later stage of processing.

Returning to Figure 3, the output of the FIFO buffer 302 in the format of 410 at a nominal frequency of 60 fields per second is conveyed by standard interface 306. This interface is standard component recommended ITU-R.BT 656, which is adapted to convey information having the format and frequency of the output of FIFO buffer 302.

The second FIFO buffer 307 and its associated control signals 303 and 304 accept the standard format information from interface 306 as an input signal. This second buffer 307 acts in the same manner as FIFO buffer 302, i.e. under the control of control signals 303 and 304 to wrap its input signal picture format of the particular standard line length into an output signal picture format having a different non-standard line length. Because the encoder 203 processes the video information to be incorporated to form part of a larger HDTV picture image, the output signal 305 has the same format as the signal 301. Thus, the input signal to FIFO buffer 307 can be thought of as picture information in a second format, whilst the output signal 305 is picture information in the original, first format.

The output signal 305 is provided to encoder 203, which in turn provides a standard television encoded output 204.

It will be understood by those skilled in the art that advantageously each of buffers 302 and 307 can be located within the splitter 201 and the encoder 203 respectively. The buffers are then available for combination with other memory operations, thus minimising hardware required within the HDTV system.

It will also be understood by those skilled in the art that although the invention has been described with respect to embodiments relating to HDTV, it is of use in any system wishing to change the format of digital picture information such as scrambling of picture signals.

## Claims

1. A method of changing an input picture signal representing lines of pixels arranged to conform to a first matrix of a first line length to an output picture signal representing lines of pixels arranged to conform to a second matrix of a second line length, the method comprising the steps of:
entering into a store the pixels of the input signal sequentially in the order of the first matrix; and,
retrieving the pixels from the store in the same sequential order as entry but in lines which have a different number of pixels per line and wherein the pixels spill over from one line into the next line to conform to the line length of the second matrix.

2. The method of Claim 1, comprising the further steps of:
entering into a second store the pixels retrieved from the first said store in the sequential order of the second matrix; and,
retrieving the pixels from the second store in the same sequential order as entry but in lines which have a different number of pixels per line and wherein the pixels spill over from one line to the next to conform to the line length of an output matrix.

3. The method of Claim 2, wherein the line length of the output matrix is the same as the line length of the first matrix.

4. The method of any of the proceeding claims in which each of the input and picture output signals are in the form of a digital bit-stream.

5. The method of Claim 3, wherein the first matrix is 640 × 272 pixels and the second matrix is 720 × 240 pixels.

6. Apparatus for changing an input picture signal representing lines of pixels arranged to conform to a first matrix of a first line length to an output picture signal representing lines of pixels arranged to conform to a second matrix of a second line length, the apparatus comprising:
a store to store the pixels of the input signal sequentially in the order of the first matrix; and,
a means to output the pixels from the store in the same sequential order as entry but in lines which have a different number of pixels per line and wherein the pixels spill over from one line to the next line to conform to the line length of the second matrix.

7. Apparatus according to Claim 6, further comprising:
a second store to store the pixels retrieved from the first said store in the sequential order of the second matrix; and,
a means to output the pixels from the second store in the same sequential order as entry but in lines which have a different number of pixels per line and wherein the pixels spill over from one line to the next so as to conform to the line length of an output matrix.

8. Apparatus according to Claim 7, wherein the line length of the output matrix is the same as the line length of the first matrix.

9. Apparatus according to any of preceding Claims 6 to 8 in which each of the input and output signals are in the form of a digital bit-stream.

10. Apparatus according to any of Claims 6 to 9 in which the store is a FIFO buffer.

11. Apparatus according to Claim 10 in which the or each FIFO buffer is adapted to be available for combination with other memory operations.

12. Apparatus according to any of the preceding Claims 8 to 11, wherein the first matrix is 640 × 272 pixels and the second matrix is 720 × 240 pixels.

13. A method of processing a digital television image comprising the steps of:
splitting the television image into a spatial array of elements, each of which constitutes a picture signal representing lines of pixels arranged to conform to a first matrix of a first line length;
changing each picture signal to an output picture signal representing lines of pixels arranged to conform to a second matrix of a second line length; and,
encoding each output picture signal; wherein the step of changing each picture signal to an output picture signal representing lines of pixels arranged to conform to the second matrix includes the steps of the method according to Claim 1.

14. Apparatus for processing a digital television image comprising:
a splitter for splitting the television image into a spatial array of elements, each of which constitutes a picture signal representing lines of pixels arranged to conform to a first matrix of a first line length;
reformatting apparatus for changing each picture signal from the splitter to an output picture signal representing lines of pixels arranged to conform to a second matrix of a second line length; and,
encoders for encoding each output picture signal; wherein the reformatting apparatus comprises apparatus according to Claim 6.

## Patentansprüche

1. Verfahren zum Ändem eines Eingangsbildsignals, das Zeilen von Pixeln darstellt, die so angeordnet sind, daß sie einer ersten Matrix mit einer ersten Zeilenlänge entsprechen, in ein Ausgangsbildsignal, das Zeilen von Pixeln darstellt, die so angeordnet sind, daß sie einer zweiten Matrix mit einer zweiten Zeilenlänge entsprechen, wobei das Verfahren die folgenden Schritte umfaßt:
Eingeben der Pixel des Eingangssignals nacheinander in der Reihenfolge der ersten Matrix in einen Speicher; und
Abrufen der Pixel aus dem Speicher in derselben sequentiellen Reihenfolge wie bei der Eingabe, aber in Zeilen, die eine andere Anzahl von Pixeln pro Zeile aufweisen, und wobei die Pixel von einer Zeile in die nächste Zeile überlaufen, damit sie der Zeilenlänge der zweiten Matrix entsprechen.

2. Verfahren nach Anspruch 1 mit den folgenden weiteren Schritten:
Eingeben der aus dem ersten Speicher abgerufenen Pixel in der sequentiellen Reihenfolge der zweiten Matrix in einen zweiten Speicher; und
Abrufen der Pixel aus dem zweiten Speicher in derselben sequentiellen Reihenfolge wie bei der Eingabe, jedoch in Zeilen, die eine andere Anzahl von Pixeln pro Zeile aufweisen, und wobei die Pixel von einer Zeile zur nächsten überlaufen, damit sie der Zeilenlänge einer Ausgangsmatrix entsprechen.

3. Verfahren nach Anspruch 2, wobei die Zeilenlänge der Ausgangsmatrix dieselbe ist wie die Zeilenlänge der ersten Matrix.

4. Verfahren nach einem der vorangehenden Ansprüche, wobei jedes der Eingangs- und Ausgangsbildsignale in Form eines digitalen Bitstroms vorliegt.

5. Verfahren nach Anspruch 3, wobei die erste Matrix 640 x 272 Pixel ist und die zweite Matrix 720 x 240 Pixel ist.

6. Vorrichtung zum Ändern eines Eingangsbildsignals, das Zeilen von Pixeln darstellt, die so angeordnet sind, daß sie einer ersten Matrix mit einer ersten Zeilenlänge entsprechen, in ein Ausgangsbildsignal, das Zeilen von Pixeln darstellt, die so angeordnet sind, daß sie einer zweiten Matrix mit einer zweiten Zeilenlänge entsprechen, wobei die Vorrichtung folgendes umfaßt:
einen Speicher zum Speichern der Pixel des Eingangssignals nacheinander in der Reihenfolge der ersten Matrix; und
eine Einrichtung zum Ausgeben der Pixel aus dem Speicher in derselben sequentiellen Reihenfolge wie bei der Eingabe, aber in Zeilen, die eine andere Anzahl von Pixeln pro Zeile aufweisen, und wobei die Pixel von einer Zeile in die nächste Zeile überlaufen, damit sie der Zeilenlänge der zweiten Matrix entsprechen

7. Vorrichtung nach Anspruch 6, welche ferner folgendes umfaßt:
einen zweiten Speicher zum Speichern der aus dem ersten Speicher abgerufenen Pixel in der sequentiellen Reihenfolge der zweiten Matrix; und
eine Einrichtung zum Ausgeben der Pixel aus dem zweiten Speicher in derselben sequentiellen Reihenfolge wie bei der Eingabe, jedoch in Zeilen, die eine andere Anzahl von Pixeln pro Zeile aufweisen, und wobei die Pixel von einer Zeile zur nächsten überlaufen, damit sie der Zeilenlänge einer Ausgangsmatrix entsprechen

8. Vorrichtung nach Anspruch 7, wobei die Zeilenlänge der Ausgangsmatrix dieselbe ist wie die Zeilenlänge der ersten Matrix.

9. Vorrichtung nach einem der vorangehenden Ansprüche 6 bis 8, wobei jedes der Eingangs- und Ausgangssignale in Form eines digitalen Bitstroms vorliegt.

10. Vorrichtung nach einem der Ansprüche 6 bis 9, wobei der Speicher ein FIFO-Puffer ist.

11. Vorrichtung nach Anspruch 10, wobei der oder jeder FIFO-Puffer dazu ausgelegt ist, zur Kombination mit anderen Speicheroperationen verfügbar zu sein.

12. Vorrichtung nach einem der vorangehenden Ansprüche 8 bis 11, wobei die erste Matrix 640 x 272 Pixel ist und die zweite Matrix 720 x 240 Pixel ist.

13. Verfahren zum Verarbeiten eines digitalen Fernsehbildes mit den folgenden Schritten:
Aufteilen des Fernsehbildes in eine räumliche Matrix von Elementen, von denen jedes ein Bildsignal bildet, das Zeilen von Pixeln darstellt, die so angeordnet sind, daß sie einer ersten Matrix mit einer ersten Zeilenlänge entsprechen;
Ändern jedes Bildsignals in ein Ausgangsbildsignal, das Zeilen von Pixeln darstellt, die so angeordnet sind, daß sie einer zweiten Matrix mit einer zweiten Zeilenlänge entsprechen; und
Codieren jedes Ausgangsbildsignals; wobei der Schritt des Änderns jedes Bildsignals in ein Ausgangsbildsignal, das Zeilen von Pixeln darstellt, die so angeordnet sind, daß sie der zweiten Matrix entsprechen, die Schritte des Verfahrens nach Anspruch 1 umfaßt.

14. Vorrichtung zum Verarbeiten eines digitalen Fernsehbildes mit:
einem Teiler zum Aufteilen des Fernsehbildes in eine räumliche Matrix von Elementen, von denen jedes ein Bildsignal bildet, das Zeilen von Pixeln darstellt, die so angeordnet sind, daß sie einer ersten Matrix mit einer ersten Zeilenlänge entsprechen;
einer Umformatierungsvorrichtung zum Ändern jedes Bildsignals aus dem Teiler in ein Ausgangsbildsignal, das Zeilen von Pixeln darstellt, die so angeordnet sind, daß sie einer zweiten Matrix mit einer zweiten Zeilenlänge entsprechen; und
Codierern zum Codieren jedes Ausgangsbildsignals; wobei die Umformatierungsvorrichtung eine Vorrichtung nach Anspruch 6 umfaßt.

## Revendications

1. Procédé de changement d'un signal d'image d'entrée, représentant des lignes de pixels agencées en conformité à une première matrice ayant une première longueur de ligne, en un signal d'image de sortie représentant des lignes de pixels agencées en conformité à une deuxième matrice ayant une deuxième longueur de ligne, le procédé comprenant les étapes de :
entrée dans une mémoire des pixels du signal d'entrée séquentiellement dans l'ordre de la première matrice ; et
extraction des pixels de la mémoire dans le même ordre séquentiel que l'entrée mais en lignes qui ont un nombre différent de pixels par ligne et de sorte que les pixels se déversent d'une ligne dans la ligne suivante pour se conformer à la longueur de ligne de la deuxième matrice.

2. Procédé selon la revendication 1, comprenant les étapes supplémentaires de :
entrée dans une deuxième mémoire des pixels extraits de la dite première mémoire, dans l'ordre séquentiel de la deuxième matrice ; et
extraction des pixels de la deuxième mémoire dans le même ordre séquentiel que l'entrée mais en lignes qui ont un nombre différent de pixels par ligne et de sorte que les pixels se déversent d'une ligne à la suivante pour se conformer à la longueur de ligne d'une matrice de sortie.

3. Procédé selon la revendication 2, dans lequel la longueur de ligne de la matrice de sortie est la même que la longueur de ligne de la première matrice.

4. Procédé selon une quelconque des revendications précédentes, dans lequel chacun des signaux d'entrée et de sortie d'image est sous la forme d'un train binaire numérique.

5. Procédé selon la revendication 3, dans lequel la première matrice est de 640 x 272 pixels et la deuxième matrice est de 720 x 240 pixels.

6. Appareil pour changer un signal d'image d'entrée, représentant des lignes de pixels agencées en conformité à une première matrice ayant une première longueur de ligne, en un signal d'image de sortie représentant des lignes de pixels agencées en conformité à une deuxième matrice ayant une deuxième longueur de ligne, l'appareil comprenant :
une mémoire pour stocker les pixels du signal d'entrée séquentiellement dans l'ordre de la première matrice ; et
un moyen d'extraction des pixels de la mémoire dans le même ordre séquentiel que l'entrée mais en lignes qui ont un nombre différent de pixels par ligne, et dans lequel les pixels se déversent d'une ligne à la ligne suivante pour se conformer à la longueur de ligne de la deuxième matrice.

7. Appareil selon la revendication 6, comprenant en outre:
une deuxième mémoire pour stocker les pixels extraits de la dite première mémoire dans l'ordre séquentiel de la deuxième matrice ; et
un moyen d'extraction des pixels de la deuxième mémoire dans le même ordre séquentiel que l'entrée mais en lignes qui ont un nombre différent de pixels par ligne, et dans lequel les pixels se déversent d'une ligné à la suivante de façon à se conformer à la longueur de ligne d'une matrice de sortie.

8. Appareil selon la revendication 7, dans lequel la longueur de ligne de la matrice de sortie est la même que la longueur de ligne de la première matrice.

9. Appareil selon une quelconque des revendications précédentes 6 à 8, dans lequel chacun des signaux d'entrée et de sortie est sous la forme d'un train binaire numérique.

10. Appareil selon une quelconque des revendications 6 à 9, dans lequel la mémoire est un tampon de type premier entré-premier sorti FIFO.

11. Appareil selon la revendication 10, dans lequel le ou chaque tampon FIFO est prévu de manière à être disponible pour une combinaison avec d'autres opérations de mémoire.

12. Appareil selon une quelconque des revendications précédentes 8 à 11, dans lequel la première matrice est de 640 x 272 pixels et la deuxième matrice est de 720 x 240 pixels.

13. Procédé de traitement d'une image de télévision numérique, comprenant les étapes de :
division de l'image de télévision en un ensemble spatial d'éléments dont chacun constitue un signal d'image représentant des lignes de pixels agencées en conformité à une première matrice d'une première longueur de ligne ;
changement de chaque signal d'image en un signal d'image de sortie représentant des lignes de pixels agencées en conformité à une deuxième matrice ayant une deuxième longueur de ligne ; et
codage de chaque signal d'image de sortie, dans lequel l'étape de changement de chaque signal d'image en un signal d'image de sortie représentant des lignes de pixels agencées en conformité à la deuxième matrice comporte les étapes du procédé selon la revendication 1.

14. Appareil pour le traitement d'une image de télévision numérique comprenant :
un séparateur pour diviser l'image de télévision en un ensemble spatial d'éléments, dont chacun constitue un signal d'image représentant des lignes de pixel agencées en conformité à une première matrice d'une première longueur de ligne ;
un appareil de reformatage pour changer chaque signal d'image venant du séparateur en un signal d'image de sortie représentant des lignes de pixels agencées en conformité à une deuxième matrice d'une deuxième longueur de ligne ; et
des codeurs pour coder chaque signal d'image de sortie ; dans lequel l'appareil de reformatage comprend un appareil selon la revendication 6.
